(19)
Europäisches
Patentamt
European
Patent Office
Office européen
des brevets

(11) **EP 3 989 541 A1**

(12) **EUROPEAN PATENT APPLICATION**
published in accordance with Art. 153(4) EPC

(43) Date of publication:
**27.04.2022 Bulletin 2022/17**

(21) Application number: **20826167.7**

(22) Date of filing: **22.06.2020**

(51) International Patent Classification (IPC):
*H04N 13/366* (2018.01)        *G02B 30/00* (2020.01)
*G03B 35/24* (2021.01)        *G09F 9/00* (2006.01)
*G09G 5/00* (2006.01)        *G09G 5/10* (2006.01)
*G09G 5/36* (2006.01)        *H04N 13/31* (2018.01)

(52) Cooperative Patent Classification (CPC):
**G09G 3/003; G02B 30/00; G03B 35/24; G09F 9/00;
G09G 5/00; G09G 5/10; G09G 5/36; H04N 13/31;
H04N 13/366;** G09G 2300/023

(86) International application number:
**PCT/JP2020/024446**

(87) International publication number:
**WO 2020/256154 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2019 JP 2019115736**

(71) Applicant: **Kyocera Corporation
Kyoto-shi, Kyoto 612-8501 (JP)**

(72) Inventors:
• **KUSAFUKA, Kaoru
  Kyoto-shi, Kyoto 612-8501 (JP)**
• **HASHIMOTO, Sunao
  Kyoto-shi, Kyoto 612-8501 (JP)**

(74) Representative: **Viering, Jentschura & Partner
mbB**
**Patent- und Rechtsanwälte
Am Brauhaus 8
01099 Dresden (DE)**

(54) **THREE-DIMENSIONAL DISPLAY DEVICE, THREE-DIMENSIONAL DISPLAY SYSTEM, AND MOVING OBJECT**

(57)    A three-dimensional display device (3) includes a display panel (7), a shutter panel (8), an obtainer (4), an input unit (5), and a controller (9). The display panel (7) includes a plurality of subpixels (P) that display a parallax image. The shutter panel (8) defines a ray direction of image light. The obtainer (4) obtains an illuminance level. The input unit (5) receives a position of a pupil. The controller (9) causes a set of subpixels (P) included in the plurality of subpixels (P) to display a black image based on the illuminance level. The controller (9) determines an origin position. The origin position (EP10) is a position of the pupil for a viewable section (7a) to have a center aligning with a center of a set of consecutive subpixels (P) in an interocular direction. The set of consecutive subpixels (P) is included in the plurality of subpixels (P) and displaying the first image or the second image corresponding to the viewable section (7a). The controller (9) controls the display panel (7) based on a displacement of the pupil from the origin position in the interocular direction.

FIG. 6

**Description**

**FIELD**

The present disclosure relates to a three-dimensional (3D) display device, a 3D display system, and a movable object.

**BACKGROUND**

A known technique is described in, for example, Patent Literature 1.

**CITATION LIST**

**PATENT LITERATURE**

Patent Literature 1: Japanese Unexamined Patent Application Publication No. 2001-166259

**BRIEF SUMMARY**

A three-dimensional display device according to an aspect of the present disclosure includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around a user. The input unit receives a position of a pupil of the user. The controller causes a set of subpixels included in the plurality of subpixels to display a black image based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls the display panel based on a displacement of the pupil from the origin position in the interocular direction.

A three-dimensional display device according to another aspect of the present disclosure includes a display panel, a shutter panel, an obtainer, an input unit, and a controller. The display panel includes a plurality of subpixels that display a parallax image including a first image and a second image having parallax between the images. The shutter panel includes a plurality of shutter cells each having a state controllable into a light transmissive state or a light attenuating state to define a ray direction of image light from the parallax image. The obtainer obtains an ambient illuminance level around a user. The input unit receives a position of a pupil of the user. The controller controls the state of the shutter panel based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls the display panel based on the state and on a displacement of the pupil from the origin position.

A three-dimensional display system according to another aspect of the present disclosure includes a detector and a three-dimensional display device. The detector detects a position of a pupil of a user. The three-dimensional display device includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around the user. The input unit receives the position of the pupil detected by the detector. The controller causes a set of subpixels included in the plurality of subpixels to display a black image based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls at least the display panel based on a displacement of the pupil from the origin position in the interocular direction.

A three-dimensional display system according to another aspect of the present disclosure includes a detector and a three-dimensional display device. The detector detects a position of a pupil of a user. The three-dimensional display device includes a display panel, a shutter panel, an obtainer, an input unit, and a controller. The display panel includes a plurality of subpixels that display a parallax image including a first image and a second image having parallax between the images. The shutter panel includes a plurality of shutter cells each having a state controllable into a light transmissive state or a light attenuating state to define a ray direction of image light from the parallax image. The obtainer obtains an ambient illuminance level around the user. The input unit receives the position of the pupil of the user. The controller controls the state of the shutter panel based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls the display panel based on the state and on a displacement of the pupil from the origin position.

A movable object according to another aspect of the present disclosure includes a detector and a three-dimensional display device. The detector detects a position of a pupil of a user. The three-dimensional display device includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around the user. The input unit receives the position of the pupil of the user. The controller causes a set of subpixels included in the plurality of subpixels to display a black image based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls at least the display panel based on a displacement of the pupil from the origin position in the interocular direction.

A movable object according to another aspect of the present disclosure includes a detector and a three-dimensional display device. The detector detects a position of a pupil of a user. The three-dimensional display device includes a display panel, a shutter panel, an obtainer, an input unit, and a controller. The display panel includes a plurality of subpixels that display a parallax image including a first image and a second image having parallax between the images. The shutter panel includes a plurality of shutter cells each having a state controllable into a light transmissive state or a light attenuating state to define a ray direction of image light from the parallax image. The obtainer obtains an ambient illuminance level around the user. The input unit receives the position of the pupil of the user. The controller controls the state of the shutter panel based on the ambient illuminance level. The controller determines an origin position. The origin position is a position of the pupil for a viewable section on the display panel to have a center aligning with a center of a set of consecutive subpixels in an interocular direction along a line segment passing through pupils of two eyes of the user. The viewable section is viewable with the pupil of one of the two eyes of the user. The set of consecutive subpixels is included in the plurality of subpixels and displaying the first image or the second image corresponding to the viewable section. The controller controls the display panel based on the state and on a displacement of the pupil from the origin position.

A three-dimensional display device according to another aspect of the present disclosure includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around a user. The input unit receives a position of a pupil of the user. The controller causes a set of subpixels included in the plurality of subpixels to display a black image based on the ambient illuminance level. The controller controls display of the parallax image based on the ambient illuminance level and on the position of the pupil.

A three-dimensional display device according to another aspect of the present disclosure includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around a user. The input unit receives a position of a pupil of the user. The controller causes a set of subpixels included in the plurality of subpixels to display a black image based on the ambient illuminance level. The controller controls display of the parallax image based on whether the black image is displayed and on the position of the pupil.

A three-dimensional display device according to another aspect of the present disclosure includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around a user. The input unit receives a position of a pupil of the user. The controller causes a set of subpixels included in the plurality of subpixels to display a black image based on the ambient illuminance level. The controller changes, based on the ambient illuminance level, the position of the pupil that causes a change in display of the parallax image.

A three-dimensional display device according to another aspect of the present disclosure includes a display panel, a shutter panel, an obtainer, an input unit, and a controller. The display panel includes a plurality of subpixels that display a parallax image including a first image and a second image having parallax between the images. The shutter panel defines a ray direction of image light from the parallax image. The obtainer obtains an ambient illuminance level around a user. The input unit receives a position of a pupil of the user. The controller causes a set of subpixels included in the plurality of subpixels to display a black image based on the ambient illuminance level. The controller changes, based on whether the black image is displayed, the position of the pupil that causes a change in display of the parallax image.

## BRIEF DESCRIPTION OF DRAWINGS

The objects, features, and advantages of the present disclosure will become more apparent from the following detailed description and the drawings.

FIG. 1 is a diagram of a 3D display system according to a first embodiment viewed in a vertical direction.
FIG. 2 is a diagram of a display panel shown in FIG. 1 viewed in a depth direction.
FIG. 3 is a diagram of a shutter panel shown in FIG. 1 viewed in the depth direction.
FIG. 4 is a diagram describing subpixels viewable with a left eye.
FIG. 5 is a diagram describing subpixels viewable with a right eye.
FIG. 6 is a diagram describing viewable sections varying in the pupil diameter.
FIG. 7 is a diagram describing viewable sections varying in the display of a black image.
FIG. 8 is a diagram describing a first example of control based on the position of the pupil.
FIG. 9 is a diagram describing viewable sections varying in the state of shutter cells.
FIG. 10 is a diagram describing a second example of control based on the position of the pupil.
FIG. 11 is a diagram of a 3D display system according to a second embodiment viewed in a vertical direction.
FIG. 12 is a diagram of an example head-up display (HUD) incorporating the 3D display system shown in FIG. 1.
FIG. 13 is a diagram of an example movable object incorporating the HUD shown in FIG. 10.

## DETAILED DESCRIPTION

First Embodiment

A first embodiment of the present disclosure will now be described with reference to the drawings. The drawings referred to hereafter are schematic and are not drawn to scale relative to the actual size of each component.

A three-dimensional (3D) display device with the structure that forms the basis of a 3D display device according to one or more embodiments of the present disclosure will be described first.

As the 3D display device with the structure that forms the basis of the 3D display device according to one or more embodiments of the present disclosure, a known 3D display device for enabling glasses-free 3D image viewing includes an optical element that directs a part of image light from a display panel to reach a right eye and another part of the image light to reach a left eye.

However, the inventor and others have noticed that crosstalk may increase as an ambient illuminance level around an image viewed by the user decreases and may disable the user from properly viewing a 3D image appearing on the display panel.

One or more aspects of the present disclosure are directed to a 3D display device, a 3D display system, and a movable object that allow a user to properly view a 3D image independently of changes in the ambient illuminance level around the image viewed by the user.

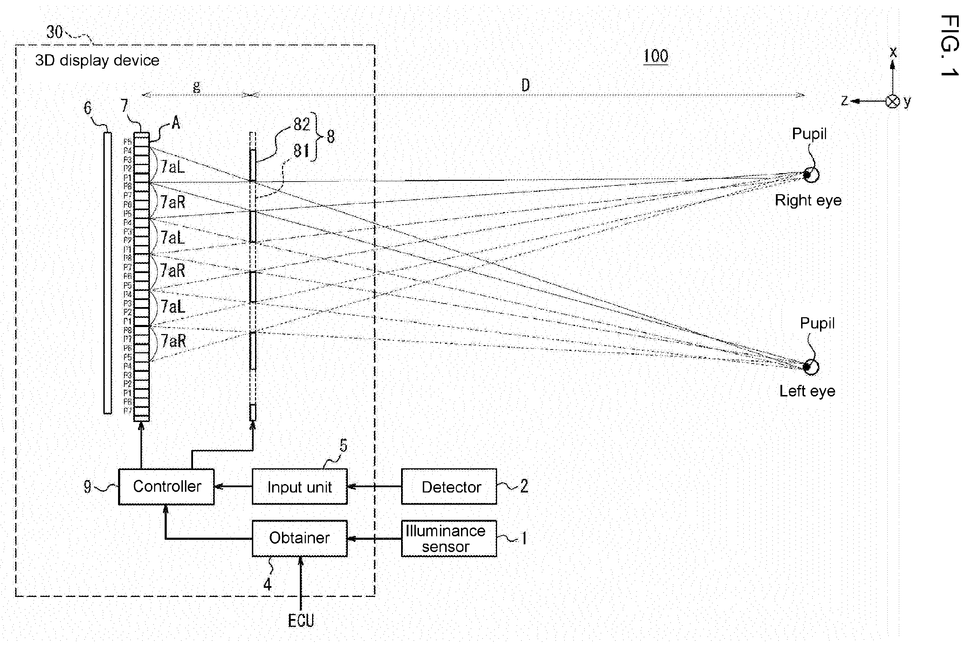

As shown in FIG. 1, a 3D display system 100 according to a first embodiment of the present disclosure includes an illuminance sensor 1, a detector 2, and a 3D display device 3.

The illuminance sensor 1 may detect the ambient illuminance level around a user. The illuminance sensor 1 may output the detected illuminance level to the 3D display device 3. The illuminance sensor 1 may include a photodiode or a phototransistor.

The detector 2 detects the position of the pupil of either the left eye or the right eye of the user and outputs the position to the 3D display device 3. The detector 2 may include, for example, a camera. The detector 2 may capture an image of the user's face with the camera. The detector 2 may detect the position of the pupil of at least one of the left eye or the right eye using an image captured with the camera. The detector 2 may detect, using an image captured with one camera, the position of the pupil of at least one of the left eye or the right eye as coordinates in a 3D space. The detector 2 may detect, using images captured with two or more cameras, the position of the pupil of at least one of the left eye or the right eye as coordinates in a 3D space.

The detector 2 may eliminate a camera and may be connected to an external camera. The detector 2 may include an input terminal for receiving signals from the external camera. The external camera may be connected to the input terminal directly. The external camera may be connected to the input terminal indirectly through a shared network. The detector 2 that eliminates a camera may include an input terminal for receiving image signals from the camera. The detector 2 that eliminates a camera may detect the position of the pupil of at least one of the left eye or the right eye using an image signal input into the input terminal.

The detector 2 may include, for example, a sensor. The sensor may be, for example, an ultrasonic sensor or an optical sensor. The detector 2 may detect the position of the user's head with the sensor, and detect the position of the pupil of at least one of the left eye or the right eye based on the head position. The detector 2 may include one sensor or two or more sensors to detect the position of the pupil of at least one of the left eye or the right eye as coordinates in a 3D space.

The 3D display device 3 includes an obtainer 4, an input unit 5, an illuminator 6, a display panel 7, a shutter panel 8, and a controller 9.

The obtainer 4 may obtain the illuminance level detected by the illuminance sensor 1. The obtainer 4 may obtain the illuminance level from any device that includes the illuminance sensor 1. For example, when the 3D display device 3 is mounted on a movable object 300, the headlights of the movable object 300 may be controlled to be turned on or off in accordance with ambient brightness. In this case, the obtainer 4 may obtain the illuminance level detected by an illuminance sensor installed in the movable object 300 from an electronic control unit (ECU) that controls the headlights of the movable object 300. The obtainer 4 may obtain lighting information about the headlights instead of the illuminance level.

The movable object according to one or more embodiments of the present disclosure includes a vehicle, a vessel, or an aircraft. The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an agricultural vehicle or a construction vehicle. The industrial vehicle includes, but is not limited to, a forklift or a golf cart. The agricultural vehicle includes, but is not limited to, a tractor, a cultivator, a transplanter, a binder, a combine, or a lawn mower. The construction vehicle includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft.

The input unit 5 may receive the position of the pupil detected by the detector 2.

The illuminator 6 may illuminate a surface of the display panel 7. The illuminator 6 may include, for example, a light source, a light guide plate, a diffuser plate, and a diffusion sheet. The illuminator 6 emits illumination light from the light source and spreads the illumination light uniformly in the direction along the surface of the display panel 7 using its components such as the light guide plate, the diffuser plate, and the diffusion sheet. The illuminator 6 may emit the uniform light toward the display panel 7.

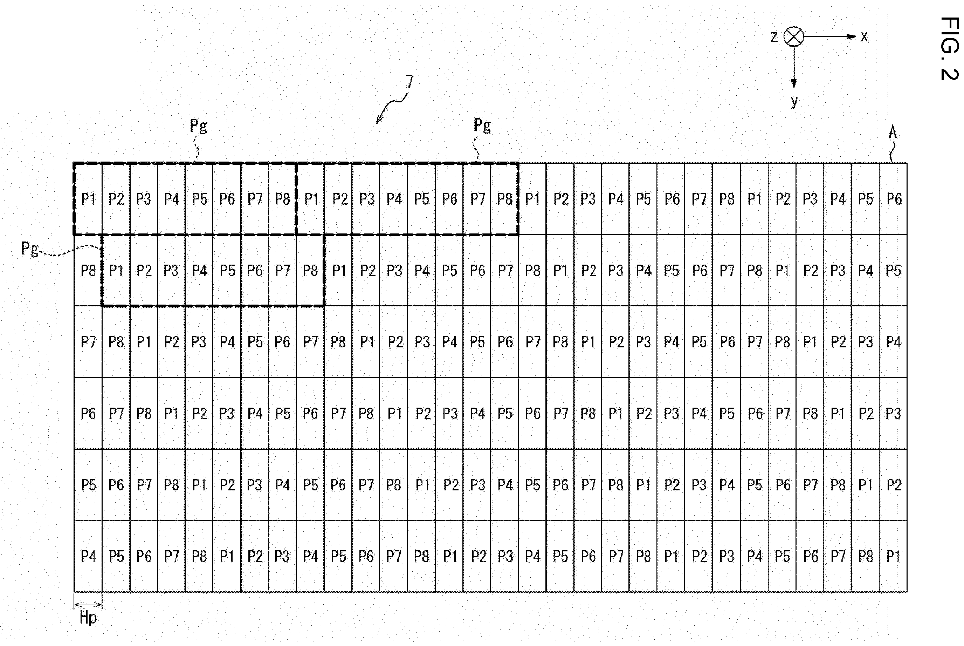

The display panel 7 may be, for example, a transmissive liquid crystal display panel. The display panel 7 is not limited to a transmissive liquid crystal display panel but may be another display panel such as an organic electroluminescent (EL) display. When the display panel 7 is self-luminous, the 3D display device 3 may eliminate the illuminator 6. The display panel 7 that is a liquid crystal panel will now be described. As shown in FIG. 2, the display panel 7 includes a two-dimensional active area A including multiple divisional areas. The active area A displays a parallax image. The parallax image includes a left-eye image (first image) and a right-eye image (second image) having parallax with the left-eye image. The left-eye image is viewable with the left eye (first eye) of the user. The right-eye image is viewable with the right eye (second eye) of the user. The divisional areas are defined in a grid-like black matrix in a first direction and in a second direction perpendicular to the first direction. The first direction is an interocular direction along a line segment passing through the pupils of the user's two eyes. The direction perpendicular to the first and second directions is referred to as a third direction. In the present embodiment, the first direction is defined as the horizontal direction. The second direction is defined as the vertical direction. The third direction is defined as the depth direction. However, the first, second, and third directions are not limited to the directions referred to above. In the drawings, the first direction is written as x-direction, the second direction as y-direction, and the third direction as z-direction.

Each divisional area corresponds to a subpixel. Thus, the active area A includes multiple subpixels arranged in a grid in the horizontal and vertical directions.

Each subpixel corresponds to any one of red (R), green (G), and blue (B). A set of three subpixels colored R, G, and B forms a pixel. A pixel may be referred to as a picture element. For example, multiple subpixels forming individual pixels are arranged in the horizontal direction. The vertical direction is perpendicular to the horizontal direction on the surface of the display panel 7.

Multiple subpixels arranged in the active area A as described above form subpixel groups Pg. Each subpixel group Pg includes a predetermined number of subpixels in the horizontal and vertical directions. Each subpixel P may have the same subpixel length Hp, or the horizontal length. Each subpixel group Pg includes ($n_1 \times b$) subpixels P1 to $P(n_1 \times b)$, which are consecutively arranged in b row(s) in the vertical direction and in $n_1$ columns in the horizontal direction. In the example shown in FIG. 2, the subpixel groups Pg are repeatedly arranged in the horizontal direction. The subpixel groups Pg are repeatedly arranged in the vertical direction at positions shifted by one subpixel in the horizontal direction from the corresponding subpixels in adjacent rows. In the present embodiment, $n_1 = 8$ and $b = 1$ are satisfied, for example. As shown in FIG. 2, the active area A includes the subpixel groups Pg each including eight consecutive subpixels P1 to P8 arranged in one row in the vertical direction and in eight columns in the horizontal direction. Each of symbols P1 to P8 is identification information for the corresponding subpixel. In FIG. 2, some of the subpixel groups Pg are denoted by reference signs.

Each subpixel group Pg is the smallest unit controllable by the controller 9 (described later) to display an image for each of right and left eyes. The subpixels P1 to $P(2 \times n_1 \times b)$ included in each subpixel group Pg with the same identification information are controlled by the controller 9 at the same time. For example, the controller 9 switches the image to be displayed by the subpixels P1 from the left-eye image to the right-eye image or to a black image (described later) at the same time in all the subpixel groups Pg. The black image has a luminance level lower than a predetermined value (e.g., a luminance level of 10 out of 256 shades) close to the lowest luminance level.

As shown in FIG. 1, the shutter panel 8 is planar along the active area A and arranged at a predetermined distance (gap) g from the active area A. The shutter panel 8 may be located opposite to the illuminator 6 from the display panel 7. The shutter panel 8 may be located between the display panel 7 and the illuminator 6.

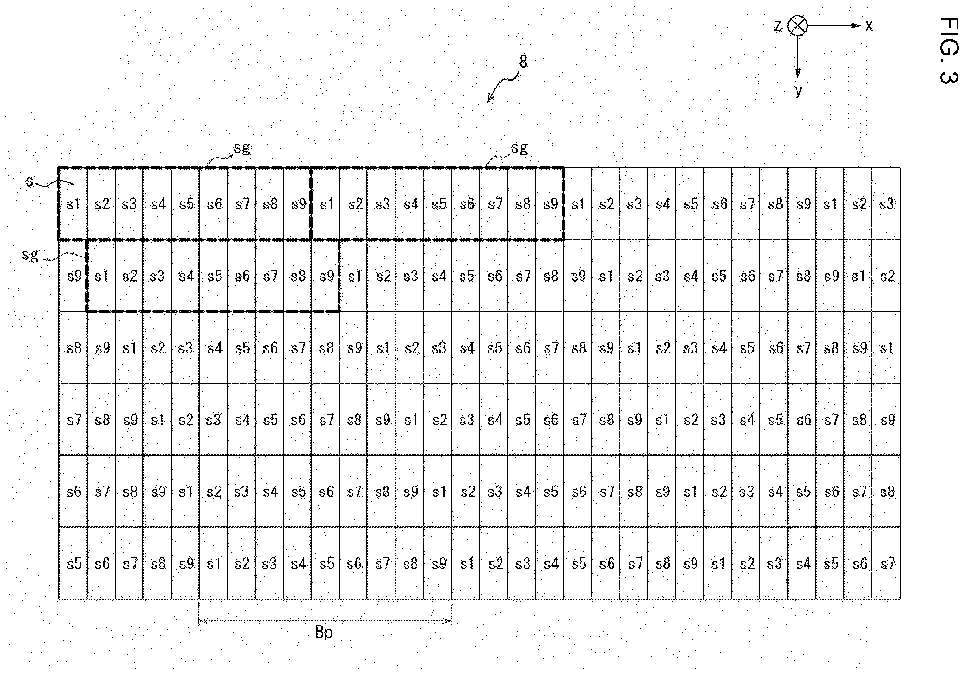

The shutter panel 8 includes a liquid crystal shutter. As shown in FIG. 3, the shutter panel 8 includes multiple shutter cells s arranged in a grid in the horizontal and vertical directions. Each shutter cell s may have the same shutter cell length Hs, or the horizontal length. The shutter cells s included in the shutter panel 8 form shutter cell groups sg. Each shutter cell group sg includes a predetermined number of subpixels in the horizontal and vertical directions. More specifically, each shutter cell group sg includes ($n_2 \times b$) shutter cells s1 to $s(n_2 \times b)$, which are consecutively arranged in b row(s) in the vertical direction and in $n_2$ columns in the horizontal direction. The shutter cell groups sg are arranged to correspond to the arrangement of the subpixels in the subpixel groups Pg. The shutter cell groups sg are repeatedly arranged in the horizontal direction. The shutter cell groups sg are repeatedly arranged in the vertical direction at positions shifted by one shutter cell in the horizontal direction from the corresponding shutter cells in adjacent rows.

In the present embodiment, $n_2 = 9$ and $b = 1$ are satisfied, for example. As shown in FIG. 3, the shutter panel 8 includes shutter cell groups sg each including nine consecutive shutter cells s1 to s9 arranged in one row in the vertical direction and in nine columns in the horizontal direction. Each of symbols s1 to s9 is identification information for the corresponding shutter cell s. In FIG. 3, some of the shutter cell groups sg are denoted by reference signs.

Each shutter cell s has a light transmittance controllable by changing the voltage applied to the shutter cell s as controlled by the controller 9. The controller 9 controls selected ones of the multiple shutter cells s into a light transmissive state and the remaining shutter cells s into a light attenuating state. Thus, as shown in FIG. 3, the shutter panel 8 has areas in the light transmissive state that serve as transmissive areas 81 and the remaining areas in the light attenuating state that serve as attenuating areas 82. The transmissive areas 81 may transmit light with a transmittance of a first predetermined value or greater. The first predetermined value is greater than a second predetermined value (described later). The attenuating areas 82 may transmit light with a transmittance of the second predetermined value or less. For example, the attenuating areas 82 block light incident on the shutter panel 8 and transmit substantially no light. The ratio of the second predetermined value to the first predetermined value is to be minimized. The ratio of the second predetermined value to the first predetermined value may be 1/100 in one example. The ratio of the second predetermined value to the first predetermined value may be 1/1000 in another example.

Thus, as shown in FIG. 1, the shutter panel 8 defines a ray direction that is the traveling direction of image light emitted from the subpixels. Image light emitted from some subpixels in the active area A passes through the transmissive areas 81 to reach the pupil of the user's left eye. Image light emitted from the other subpixels in the active area A passes through the transmissive areas 81 to reach the pupil of the user's right eye. Thus, the user views left viewable sections 7aL (first viewable sections) defining a part of the active area A with the pupil of the left eye, and views right viewable sections 7aR (second viewable sections) defining another part of the active area A with the pupil of the right eye. The left viewable sections 7aL and the right viewable sections 7aR may hereafter be referred to as viewable sections 7a.

When Formulas 1 to 3 below are satisfied, the left viewable sections 7aL and the right viewable sections 7aR occupy the entire area with no overlap or no space between the left viewable sections 7aL and the right viewable sections 7aR. In Formulas 1 and 2, g is the gap or distance between the display panel 7 and the shutter panel 8. In Formula 2, Bpo is the transmissive area length that is the horizontal length of each transmissive area 81. In Formulas 1 and 2, D is the proper viewing distance that is the distance between the shutter panel 8 and each of the right and left eyes of the user. In Formulas 2 and 3, x is the viewable section length that is the horizontal length of each of the left viewable sections 7aL and right viewable sections 7aR. In Formula 1, E is the interocular distance that is the horizontal distance between the pupil center of the left eye and the pupil center of the right eye. The interocular distance E may be, for example, a distance of 61.1 to 64.4 mm, which is calculated through studies performed by the National Institute of Advanced Industrial Science and Technology. In Formulas 1 and 2, DP is the pupil diameter of each of the left and right eyes.

$$E + DP:D = Hp \times n_1:g \qquad (1)$$

$$x = Bpo \left(1 + \frac{g}{D}\right) + \frac{g \times DP}{D} \qquad (2)$$

$$x = (Hp \times n_1) / 2 \qquad (3)$$

In the present embodiment, a fixed value is used as each of the proper viewing distance D, the subpixel length Hp, the number $n_1$ of subpixels P arranged in the horizontal direction in each subpixel group Pg, the gap g, the shutter cell length Hs, and the number $n_2$ of shutter cells s arranged in the horizontal direction in each shutter cell group sg. As described above, the shutter panel 8 includes multiple shutter cells s, and each shutter cell s is controllable into a light transmissive state or a light attenuating state. In this structure, the transmissive area length Bpo is an integer multiple of the shutter cell length Hs. When the pupil diameter DP is a reference diameter DP0, the transmissive area length Bpo is a reference transmissive area length Bpo0. The shutter cell length Hs and the number $n_2$ of shutter cells s arranged in the horizontal direction in each shutter cell group sg are defined to cause the reference transmissive area length Bpo0 to be an integer multiple of the shutter cell length Hs.

When the pupil diameter DP is the reference diameter DP0 and each pupil has the horizontal center located at a reference origin position EP0, the left-eye image is displayed on the left viewable sections 7aL and the right-eye image is displayed on the right viewable sections 7aR. This maximizes image light reaching the pupils and minimizes crosstalk. The reference origin position EP0 may be the center position of the pupil having the reference diameter DP0 as the pupil diameter DP for the full area of each of predetermined subpixels P consecutive in the horizontal direction to be included in a left viewable section 7aL and for the full area of each of the remaining consecutive subpixels P to be included in a right viewable section 7aR. The pupil having the horizontal center being located at a position may be hereafter simply referred to as the pupil being located at a position. The horizontal center of the pupil may be simply referred to as the center of the pupil. The horizontal position of the pupil may be simply referred to as the position of the pupil.

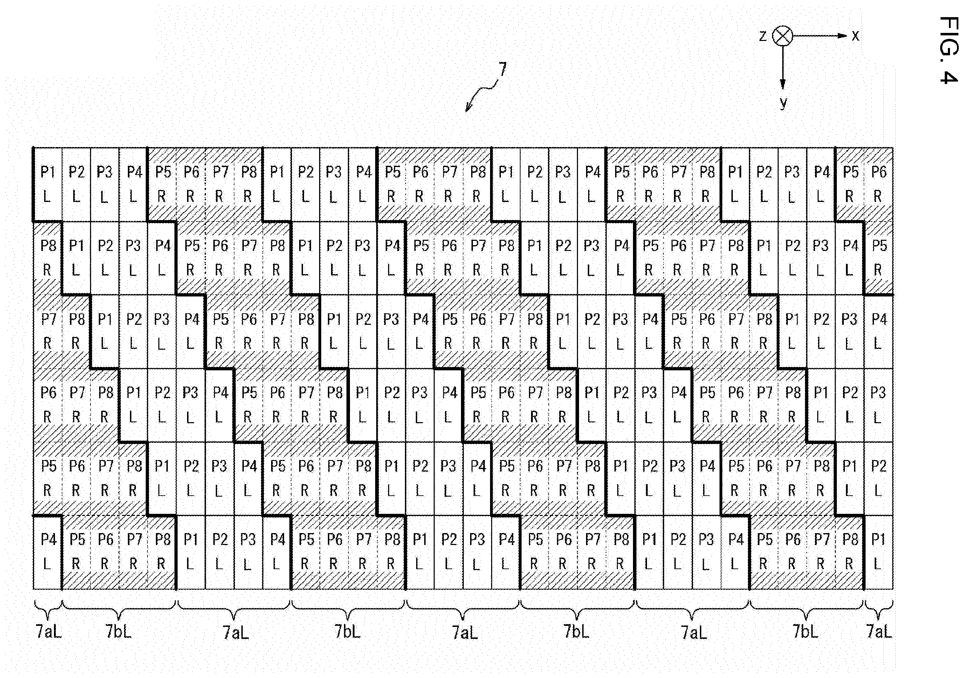

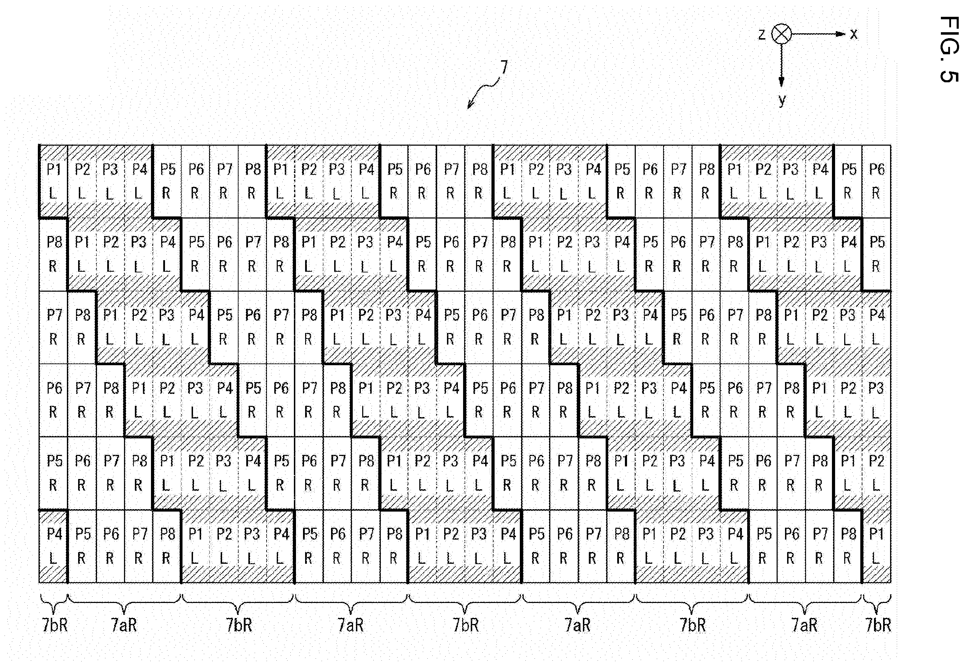

More specifically, as shown in FIG. 4, when the pupil is located at the reference origin position EP0, each left viewable section 7aL includes subpixels P1 to P4 in the active area A, and each left attenuation section 7bL includes subpixels P5 to P8 in the active area A. As shown in FIG. 5, when the pupil is located at the reference origin position, each right viewable section 7aR includes subpixels P5 to P8 in the active area A, and each right attenuation section 7bR includes subpixels P1 to P4 in the active area A. The right viewable sections 7aR are the left attenuation sections 7bL, and the right attenuation sections 7bR are the left viewable sections 7aL. In FIGs. 4 and 5, subpixels L display the left-eye image, and subpixels R display the right-eye image.

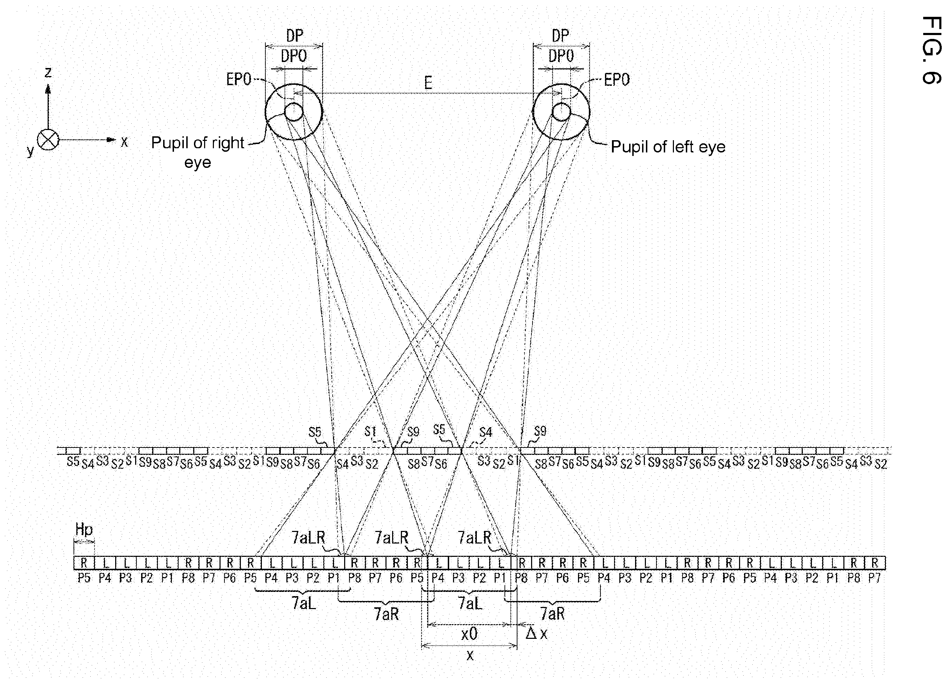

The viewable sections 7a will now be described for the pupil diameter DP greater than the reference diameter DP0. From Formula 2, the viewable section length x for the pupil diameter DP greater than the reference diameter DP0 is longer than the viewable section length x0 for the pupil diameter DP being the reference diameter DP0. Thus, the pupils located at any positions create two-eye viewable sections 7aLR that are both the left viewable sections 7aL and the right viewable sections 7aR, as shown in FIG. 6, for example. FIG. 6 shows the left viewable sections 7aL, the right viewable sections 7aR, and the two-eye viewable sections 7aLR for the pupils having the pupil diameter DP greater than the reference diameter DP0 and each located at the reference origin position EP0. For ease of understanding, FIG. 6 uses a scale different from the scale in FIG. 1. In FIG. 6, the multiple shutter cells s include shutter cells s controlled in the light transmissive state indicated by solid lines and shutter cells s controlled in the light attenuating state indicated by broken lines.

A left-eye image displayed on the two-eye viewable sections 7aLR is viewed with the pupil of the right eye. A right-eye image displayed on the two-eye viewable sections 7aLR is viewed with the pupil of left eye. Thus, the pupil diameter DP greater than the reference diameter DP0 causes more crosstalk than the pupil diameter DP being the reference diameter DP0. The controller 9 in the present embodiment reduces crosstalk that may increase with a greater pupil diameter DP. The controller 9 will now be described in detail.

The controller 9 may be connected to the components of the 3D display device 3 to control these components. The components controlled by the controller 9 include the display panel 7 and the shutter panel 8. The controller 9 may be, for example, a processor. The controller 9 may include one or more processors. The processors may include a general-purpose processor that reads a specific program to perform a specific function, or a processor dedicated to specific processing. The dedicated processor may include an application-specific integrated circuit (ASIC). The processor may include a programmable logic device (PLD). The PLD may include a field-programmable gate array (FPGA). The controller 9 may be either a system on a chip (SoC) or a system in a package (SiP) in which one or more processors cooperate with other components. The controller 9 may include a storage to store various items of information or programs to operate each component of the 3D display system 100. The storage may be, for example, a semiconductor memory. The storage may serve as a work memory for the controller 9.

First Example

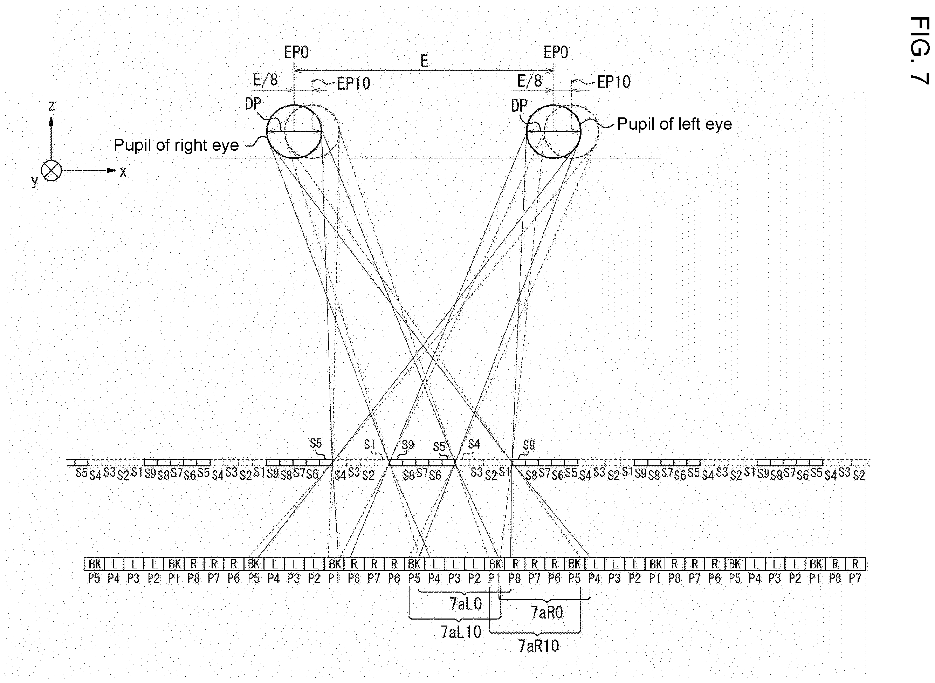

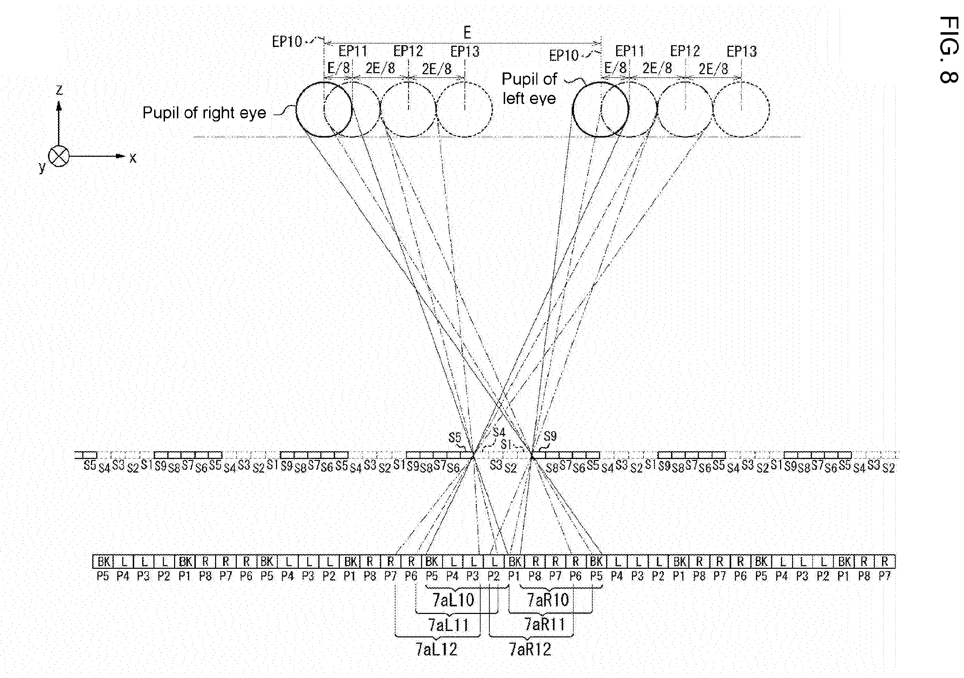

The controller 9 causes a set of subpixels P included in the multiple subpixels P to display the black image based on the illuminance level, and controls the display of the parallax image based on the illuminance level and on the position of the pupil. More specifically, the controller 9 causes a set of subpixels P included in the multiple subpixels P to display the black image based on the illuminance level, and controls the display of the parallax image based on whether the black image is displayed and on the position of the pupil. A first example of the control over the display of the black image and the parallax image performed by the controller 9 will now be described in detail with reference to FIGs. 7 and 8. For ease of understanding, FIGs. 7 and 8 each use a scale different from the scale in FIG. 1. In FIGs. 7 and 8, the multiple shutter cells s include shutter cells s controlled in the light attenuating state indicated by solid lines. In FIGs. 7 and 8, the multiple shutter cells s include shutter cells s controlled in the light transmissive state indicated by broken lines. In FIGs. 7 and 8, subpixels L display the left-eye image, and subpixels R display the right-eye image. In FIGs. 7 and 8, subpixels BK display the black image.

Determination of Pupil Diameter

In response to the obtainer 4 obtaining the illuminance level, the controller 9 determines the pupil diameter DP based on the illuminance level. For example, the controller 9 may determine the pupil diameter DP through computation based on the illuminance level. For example, the controller 9 may determine the pupil diameter DP using a table associating the illuminance level and the pupil diameter DP.

Display of Black Image

The controller 9 changes, based on the pupil diameter DP, the image to be displayed by a set of subpixels included in the multiple subpixels from the left- or right-eye image to the black image. More specifically, the controller 9 determines the two-eye viewable sections 7aLR based on the pupil diameter DP. The controller 9 calculates a ratio x1/Hp of a two-eye viewable section length x1 to the subpixel length Hp. The two-eye viewable section length x1 is the horizontal length of a two-eye viewable section 7aLR.

The controller 9 determines whether the ratio x1/Hp is higher than or equal to a first ratio. Upon determining that the ratio x1/Hp is lower than the first ratio, the controller 9 does not change the image to be displayed by any subpixel from the left- or right-eye image to the black image. Upon determining that the ratio x1/Hp is higher than or equal to the first ratio, the controller 9 changes, from the left- or right-eye image to the black image, the image to be displayed by one subpixel P of each pair of subpixels P each having a part included in a two-eye viewable section 7aLR at a ratio higher than or equal to the first ratio. The first ratio may be determined as appropriate based on the degree of crosstalk and the amount of image light. At a lower first ratio, the amount of image light decreases but crosstalk can be reduced. At a higher first ratio, crosstalk increases but the amount of image light can be increased.

In the example shown in FIG. 7, the controller 9 changes, of the subpixels P1 and P8 included in a two-eye viewable section 7aLR at a ratio higher than or equal to the first ratio, the image to be displayed by the subpixels P1 from the left-eye image to the black image. The controller 9 also changes, from the right-eye image to the black image, the image to be displayed by the subpixels P5 at relative positions corresponding to the relative positions of the subpixels P1 to the subpixels P8, of the subpixels P4 and P5 included in a two-eye viewable section 7aLR. The controller 9 may change the image to be displayed by the subpixels P8 from the right-eye image to the black image, and change the image to be displayed by the subpixels P4 from the left-eye image to the black image.

Determination of Origin Position

Upon changing the image to be displayed by a set of subpixels P included in the multiple subpixels P from the left- or right-eye image to the black image, the controller 9 determines the origin position EP10. The origin position EP10 is the position of the pupil for each viewable section 7a to have the horizontal center aligning with the center of a set of consecutive subpixels displaying the image of the type corresponding to the viewable section 7a. The image of the type corresponding to the viewable section 7a refers to the left-eye image corresponding to the left viewable section 7aL or the right-eye image corresponding to the right viewable section 7aR. More specifically, the origin position EP10 is the position of the pupil for each left viewable section 7aL or each right viewable section 7aR to have the horizontal center aligning with the horizontal center of a set of consecutive subpixels displaying the left- or right-eye image. In this example, one or more shutter cells s are changed from the light transmissive state to the light attenuating state to change the left viewable sections 7aL and the right viewable sections 7aR, as described above. This causes the origin position EP10 to be shifted from the reference origin position EP0. In this example, the origin position EP10 is the position shifted by a horizontal distance of E/n from the reference origin position EP0.

In the example shown in FIG. 7, a left viewable section 7aL0 with the pupil located at the reference origin position EP0 includes the full area of each of the subpixels P1 to P4 and a partial area of each of the subpixels P5 and P8. The left viewable section 7aL0 has the center deviating from the horizontal center of the consecutive subpixels P2 to P4 displaying the left-eye image. A left viewable section 7aL10 with the pupil located at the origin position EP10 includes the full area of each of the subpixels P2 to P4 and a partial area of each of the subpixels P5 and P1. The part of each of the subpixels P5 and P1 included in the left viewable section 7aL10 has the same horizontal length. In this case, each left viewable section 7aL10 has the horizontal center aligning with the horizontal center of the consecutive subpixels P2 to P4 displaying the left-eye image.

A right viewable section 7aR0 with the pupil located at the reference origin position EP0 includes the full area of each of the subpixels P5 to P8 and a partial area of each of the subpixels P1 and P4. The right viewable section 7aR0 has the center deviating from the center of the consecutive subpixels P6 to P8 displaying the right-eye image. A right viewable section 7aR10 with the pupil located at the origin position EP10 includes the full area of each of the subpixels P6 to P8 and a partial area of each of the subpixels P1 and P5. The part of each of the subpixels P1 and P5 included in the right viewable section 7aR10 has the same horizontal length. The right viewable section 7aR10 has the center aligning with the center of the consecutive subpixels P6 to P8 displaying the right-eye image.

Control Based on Position of Pupil

The controller 9 controls the display panel 7 based on the position of the pupil. More specifically, the controller 9 causes a set of subpixels P included in the multiple subpixels P to display the black image based on the pupil diameter DP that varies with the illuminance level, and controls the image by changing the boundary position. More specifically, upon causing a set of subpixels P included in the multiple subpixels P to display the black image, the controller 9 controls the image by changing the boundary position based on whether the black image is displayed. The boundary position refers to the position of the pupil that causes the controller 9 to change, in response to the horizontal displacement of the pupil, the display of the parallax image to allow the right-eye image to have a part included in the left viewable section at a predetermined ratio or lower and allow the left-eye image to have a part included in the right viewable section at a predetermined ratio or lower. The change in the boundary position and the control over the image in accordance with the eye position relative to the boundary position will now be described in detail.

The controller 9 calculates a horizontal distance d between the position of the pupil obtained by the obtainer 4 and the origin position EP10. The controller 9 determines a value of k that causes the distance d to satisfy Formula 4. For the images of the types displayed by first subpixels P, the controller 9 causes second subpixels P to display these images. The second subpixels P are the subpixels each shifted from the corresponding first subpixel P by k subpixels in the direction opposite to the pupil displacement direction. The type of image is the left-eye image, the right-eye image, or the black image.

$$(2k - 1) \times E/n \leq d < (2k + 1) \times E/n \qquad (4)$$

In the example shown in FIG. 8, the controller 9 determines k = 0 when the distance d is shorter than E/8, or in other words, when the pupil is between the origin position EP10 and a boundary position EP11. The boundary position EP11 is the position shifted by a horizontal distance of E/n from the origin position EP10. The left viewable section 7aL10 with the pupil located at the origin position EP10 includes the full area of each of the subpixels P2 to P4 and a partial area of each of the subpixels P5 and P1. The part of each of the subpixels P5 and P1 included in the left viewable section 7aL10 has the same horizontal length. The right viewable section 7aR10 includes the full area of each of the subpixels P6 to P8 and a partial area of each of the subpixels P1 and P5. The part of each of the subpixels P1 and P5 included in the right viewable section 7aR10 has the same horizontal length. As the pupil is displaced in the horizontal direction, each left viewable section 7aL is shifted in the direction opposite to the pupil displacement direction. This increases the area of each subpixel P5 included in each left viewable section 7aL and increases the area of each subpixel P1 included in each right viewable section 7aR. The controller 9 does not change the type of image to be displayed by each subpixel when the horizontal shift distance of each left viewable section 7aL is shorter than 50% of the subpixel length Hp. This minimizes a part of the right-eye image viewed with the pupil of the left eye and minimizes a part of the left-eye image viewed with the pupil of the right eye within the range for which the controller 9 controls the type of image at each position between the origin position EP10 and the boundary position EP11. Thus, each pupil can view the parallax image with minimum crosstalk at each position between the origin position EP10 and the boundary position EP11.

The controller 9 determines k = 1 when the distance d is longer than or equal to E/8 and shorter than 3E/8, or in other words, when the pupil is between the boundary position EP11 and a boundary position EP12. The boundary position EP12 is the position shifted by a horizontal distance of 3E/n from the origin position EP10. A left viewable section 7aL11 with the pupil located at the boundary position EP11 includes the full area of each of the subpixels P2 to P5 and a partial area of each of the subpixels P6 and P1. The part of each of the subpixels P6 and P1 included in the left viewable section 7aL11 has the same horizontal length. A right viewable section 7aR11 with the pupil located at the boundary position EP11 includes the full area of each of the subpixels P6 to P8 and P1 and a partial area of each of the subpixels P2 and P5. The part of each of the subpixels P2 and P5 included in the right viewable section 7aR11 has the same horizontal length. Further displacement of the pupil in the direction away from the origin position EP10 increases the area of each subpixel P6 included in each left viewable section 7aL and displaying the right-eye image. Still further displacement causes each subpixel P6 to have its full area included in each left viewable section 7aL. The displacement increases the area of each subpixel P2 included in each right viewable section 7aR and displaying the left-eye image. Still further displacement causes each subpixel P2 to have its full area included in each right viewable section 7aR. Further displacement of the pupil in the direction away from the origin position EP10 increases the area of each subpixel P7 included in each left viewable section 7aL and displaying the right-eye image. The displacement increases the area of each subpixel P3 included in each right viewable section 7aR and displaying the left-eye image.

For the images of the types displayed by first subpixels P with the pupil located at the origin position EP10, the controller 9 causes second subpixels P to display these images. The second subpixels P are the subpixels each shifted from the corresponding first subpixel P by one subpixel in the direction opposite to the pupil displacement direction. More specifically, the controller 9 causes the subpixels P2 to P8 and P1 to display the images of the types displayed by the subpixels P1 to P8. In this example, the controller 9 causes the subpixels P3 to P5 to display the left-eye image, causes the subpixels P7, P8, and P1 to display the right-eye image, and causes the subpixels P6 and P2 to display the black image. This minimizes a part of the right-eye image viewed with the left eye and minimizes a part of the left-eye image viewed with the pupil of the right eye within the range for which the controller 9 controls the type of image at each position between the boundary position EP11 and the boundary position EP12. This may reduce crosstalk.

The controller 9 determines k = 2 when the distance d is longer than or equal to 3E/8 and shorter than 5E/8, or in other words, when the pupil is between the boundary position EP12 and a boundary position EP13. The boundary position EP13 is the position shifted by a horizontal distance of 5E/8 from the origin position EP10. A left viewable section 7aL12 with the pupil located at the boundary position EP12 includes the full area of each of the subpixels P3 to P6 and a partial area of each of the subpixels P7 and P2. The part of each of the subpixels P7 and P2 included in the left viewable section 7aL12 has the same horizontal length. A right viewable section 7aR12 with the pupil located at the boundary position EP12 includes the full area of each of the subpixels P7, P8, P1, and P2 and a partial area of each of the subpixels P3 and P6. The part of each of the subpixels P3 and P6 included in the right viewable section 7aR12 has the same horizontal length. Further displacement of the pupil in the direction away from the origin position EP10 increases the area of each subpixel P7 included in each left viewable section 7aL and displaying the right-eye image. Still further displacement causes each subpixel P7 to have its full area included in each left viewable section 7aL. The displacement increases the area of each subpixel P3 included in each right viewable section 7aR and displaying the left-eye image. Still further displacement causes each subpixel P3 to have its full area included in each right viewable section 7aR. Further displacement of the pupil in the direction away from the origin position EP10 increases the area of each subpixel P8 included in each left viewable section 7aL and displaying the right-eye image. The displacement increases the area of each subpixel P4 included in each right viewable section 7aR and displaying the left-eye image.

For the images of the types displayed by first subpixels P with the pupil located at the origin position EP10, the controller 9 causes second subpixels P to display these images. The second subpixels P are the subpixels each shifted from the corresponding first subpixel P by two subpixels in the direction opposite to the pupil displacement direction. More specifically, the controller 9 causes the subpixels P3 to P8, P1, and P2 to display the images of the types displayed by the subpixels P1 to P8. In this example, the controller 9 causes the subpixels P4 to P6 to display the left-eye image, causes the subpixels P8, P1, and P2 to display the right-eye image, and causes the subpixels P7 and P3 to display the black image. This minimizes a part of the right-eye image viewed with the left eye and minimizes a part of the left-

image viewed with the pupil of the right eye within the range for which the controller 9 controls the type of image at each position between the boundary position EP12 and the boundary position EP13. This may reduce crosstalk.

The controller 9 in the first example causes a set of subpixels P included in the subpixels P to display the black image based on the pupil diameter DP. This allows the user to be less likely to view the right-eye image with the left eye and view the left-eye image with the right eye. A decrease in the amount of image light may cause an image to be less viewable. However, the user can view an image with less light at a lower illuminance level around the user's eyes. The user can thus properly view the 3D image with less image light reaching the pupils.

The controller 9 changes the type of image to be displayed by each subpixel based on the horizontal distance of the pupil from the origin position EP10. Thus, the pupil at each position can view the parallax image with minimum crosstalk.

Second Example

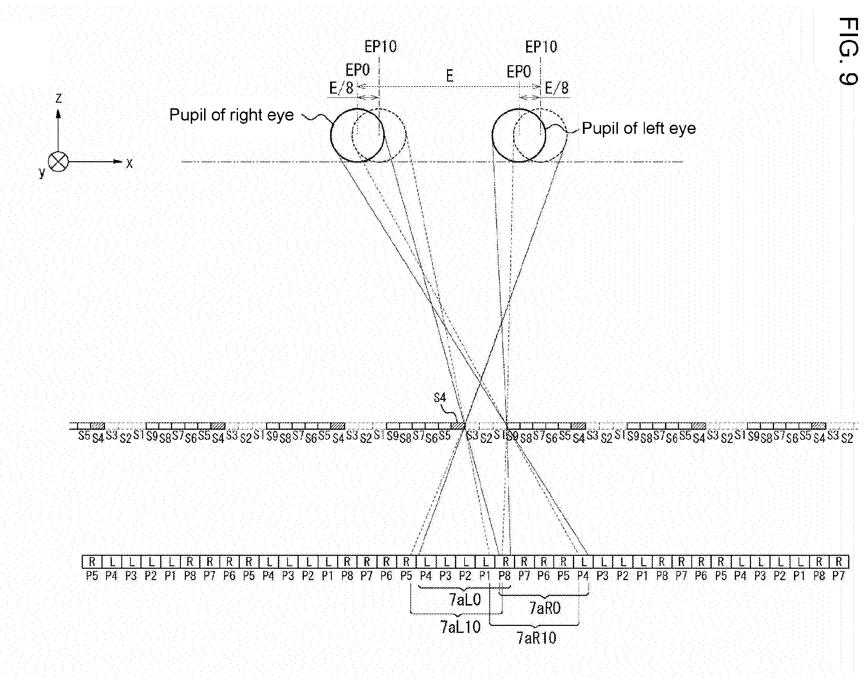

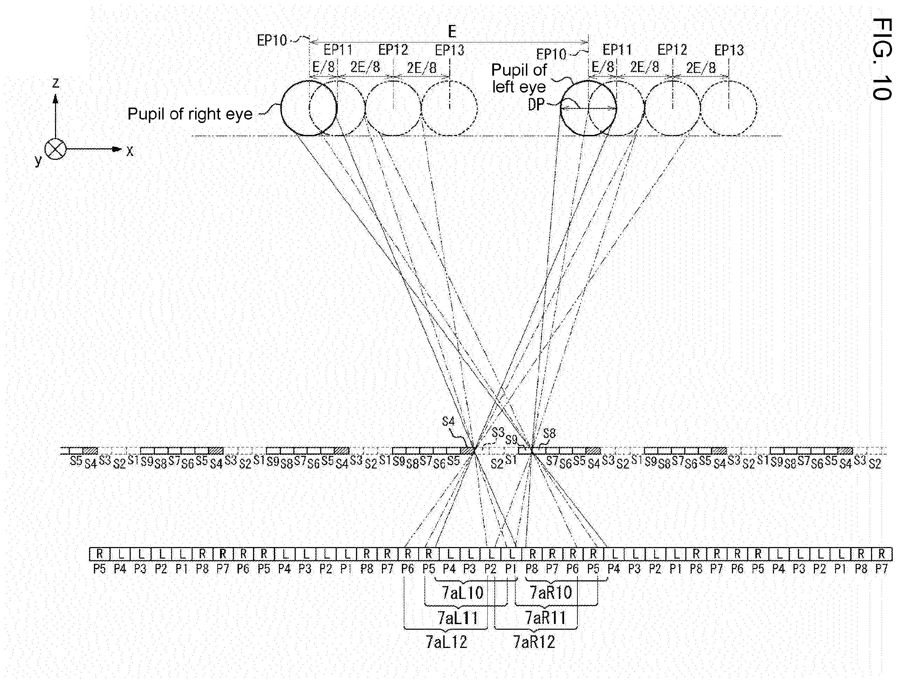

In a second example, the controller 9 controls the display panel 7 and the shutter panel 8 based on the pupil diameter DP and on the position of the pupil. The second example of the control performed by the controller 9 will now be described in detail with reference to FIGs. 9 and 10. For ease of understanding, FIGs. 9 and 10 each use a scale different from the scale in FIG. 1. In FIGs. 9 and 10, the multiple shutter cells s include shutter cells s controlled in the light attenuating state indicated by solid lines. In FIGs. 9 and 10, the multiple shutter cells s include shutter cells s controlled in the light transmissive state indicated by broken lines. In FIGs. 9 and 10, the multiple shutter cells s include hatched shutter cells s changed from the light transmissive state to the light attenuating state based on the pupil diameter DP. In FIGs. 9 and 10, subpixels L display the left-eye image, and subpixels R display the right-eye image. Determination of Pupil Diameter

In response to the obtainer 4 obtaining the illuminance level, the controller 9 may first determine the pupil diameter DP based on the illuminance level. The controller 9 specifically determines the pupil diameter DP in the same manner as in the first example. Control over Shutter Panel

The controller 9 changes, based on the pupil diameter DP, the state (the light transmissive state or the light attenuating state) of a set of shutter cells s included in the multiple shutter cells s. More specifically, the controller 9 determines the two-eye viewable sections 7aLR as shown in FIG. 6 based on the pupil diameter DP. The controller 9 determines, among the multiple shutter cells s controlled in the light transmissive state with the pupil diameter DP being the reference diameter DP0, one or more shutter cells s each having a part receiving image light emitted from the two-eye viewable sections 7aLR toward the pupils. The controller 9 calculates a ratio x2/Hs of the horizontal length x2 of the part to the shutter cell length Hs. The controller 9 determines whether the ratio x2/Hs is higher than or equal to a second ratio.

Upon determining that the ratio x2/Hs is lower than the second ratio, the controller 9 does not change the control state of any shutter cell s. Upon determining that the ratio x2/Hs is higher than or equal to the second ratio, the controller 9 changes, from the light transmissive state to the light attenuating state, one shutter cell s of each pair of shutter cells s receiving image light emitted from the two-eye viewable sections 7aLR toward the pupils among the multiple shutter cells s controlled in the light transmissive state with the pupil diameter DP being the reference diameter DP0. The second ratio may be determined as appropriate based on the degree of crosstalk and the amount of image light. At a lower second ratio, the amount of image light decreases but crosstalk can be reduced. At a higher second ratio, crosstalk increases but the amount of image light can be increased.

In the example shown in FIG. 9, the controller 9 determines that the shutter cells s1 and s4 receive image light emitted from the two-eye viewable sections 7aLR toward the pupils among the shutter cells s1 to s4 controlled in the light transmissive state with the pupil diameter DP being the reference diameter DP0. The controller 9 changes, of the shutter cells s1 and s4, the shutter cell s4 from the light transmissive state to the light attenuating state. The controller 9 may change, of the shutter cells s1 and s4, the shutter cell s1 from the light transmissive state to the light attenuating state.

When the illuminance level is higher than or equal to a reference value, the controller 9 controls each shutter cell s to cause the transmissive area length Bpo to be $4 \times Hp$ (first area length). When the illuminance level is lower than the reference value, the controller 9 controls each shutter cell s to cause the transmissive area length Bpo to be $3 \times Hp$ (second area length). The reference value is the illuminance level corresponding to the pupil diameter DP that causes the ratio of a decrease $\Delta Bpo$ in the transmissive area length Bpo to the shutter cell length Hs to be the second ratio.

Determination of Origin Position

The controller 9 changes, from the light transmissive state to the light attenuating state, shutter cells s receiving image light emitted from the two-eye viewable sections 7aLR toward the pupils among the multiple shutter cells s controlled in the light transmissive state with the pupil diameter DP being the reference diameter DP0. The controller 9 then determines the origin position EP10. As described in the first example, the origin position EP10 is the position of the pupil for each viewable section 7a to have the horizontal center aligning with the center of a set of consecutive subpixels displaying the image of the type corresponding to the viewable section 7a. In this example, one or more shutter cells s are changed from the light transmissive state to the light attenuating state to change the left viewable sections 7aL and the right viewable sections 7aR, as described above. This causes the origin position EP10 to be shifted from the reference origin position EP0. In this example, the origin position EP10 is the position of the pupil for each viewable section 7a shifted by $\Delta x$ from Formula 5 from the reference origin position EP0 in the horizontal direction. In Formula 5, Bpo0 and x0 are the respective transmissive area length Bpo and the viewable section length x before one or more shutter cells s are changed from the light transmissive state to the light attenuating state as controlled by the controller 9 in this example. In Formula 5, Bpo1 and x1 are the respective transmissive area length Bpo and the viewable section length x after one or more shutter cells s are changed from the light transmissive state to the light attenuating state as controlled by the controller 9 in this example.

$$\Delta x = \frac{1}{2} \mid x1 - x0 \mid$$

$$= \frac{1}{2} \mid \left( Bpo1 \left(1 + \frac{g}{D}\right) + \frac{g \times DP}{D}\right) - \left( Bpo0 \left(1 + \frac{g}{D}\right) + \frac{g \times DP}{D}\right) \mid$$

$$= \frac{1}{2} \mid \left( Bpo1 - Bpo0 \right) \times \left(1 + \frac{g}{D}\right) \mid \tag{5}$$

In the example shown in FIG. 9, the left viewable section 7aL0 with the pupil located at the reference origin position EP0 includes the full area of each of the subpixels P1 to P3 and a partial area of each of the subpixels P4 and P8. Each left viewable section 7aL has the center deviating from the horizontal center of the subpixels P1 to P4 displaying the left-eye image. The left viewable section 7aL10 with the pupil located at the origin position EP10 includes the full area of each of the subpixels P1 to P4 and a partial area of each of the subpixels P5 and P8. In this case, each left viewable section 7aL has the center aligning with the center of the consecutive subpixels P1 to P4 displaying the left-eye image.

The right viewable section 7aR0 with the pupil located at the reference origin position EP0 includes the full area of each of the subpixels P5 to P7 and a partial area of each of the subpixels P8 and P4. The right viewable section 7aR0 has the horizontal center deviating from the horizontal center of the subpixels P5 to P8 displaying the right-eye image. The right viewable section 7aR10 with the pupil located at the origin position EP10 includes the full area of each of the subpixels P5 to P8 and a partial area of each of the subpixels P1 and P4. The part of each of the subpixels P1 and P4 included in the right viewable section 7aR10 has the same horizontal length. The right viewable section 7aR10 has the center aligning with the center of the consecutive subpixels P5 to P8 displaying the left-eye image.

Control Based on Position of Pupil

The controller 9 controls the display panel 7 based on the position of the pupil.

The controller 9 calculates the horizontal distance d between the position of the pupil obtained by the obtainer 4 and the origin position EP10. Upon calculating the distance d, the controller 9 determines a value of k that causes the distance d to satisfy Formula 4. For the images of the types displayed by first subpixels P, the controller 9 causes second subpixels P to display these images. The second subpixels P are the subpixels each shifted from the corresponding first subpixel P by k subpixels in the direction opposite to the pupil displacement direction.

The control will now be described in detail with reference to the example shown in FIG. 10. The controller 9 determines k = 0 when the distance d is shorter than E/8, or in other words, when the pupil is between the origin position EP10 and the boundary position EP11 shifted by a horizontal distance of E/8 from the origin position EP10. The left viewable section 7aL10 with the pupil located at the origin position EP10 includes the full area of each of the subpixels P1 to P4 and a partial area of each of the subpixels P5 and P8. The part of each of the subpixels P5 and P8 included in the left viewable section 7aL10 has the same horizontal length. The right viewable section 7aR10 includes the full area of each of the subpixels P5 to P8 and a partial area of each of the subpixels P1 and P4. The part of each of the subpixels P1 and P4 included in the right viewable section 7aR10 has the same horizontal length. As the pupil is displaced in the horizontal direction, each left viewable section 7aL is shifted in the direction opposite to the pupil displacement direction. This increases the area of each subpixel P5 included in each left viewable section 7aL. As the pupil is displaced in the horizontal direction, each right viewable section 7aR is shifted in the direction opposite to the pupil displacement direction. This increases the area of each subpixel P1 included in each right viewable section 7aR. The controller 9 does not change the type of image to be displayed by each subpixel when the horizontal shift distance of each left viewable section 7aL is shorter than 50% of the subpixel length Hp. This minimizes a part of the right-eye image viewed with the pupil of the left eye and minimizes a part of the right-eye image viewed with the pupil of the right eye within the range for which the controller 9 controls the type of image at each position between the origin position EP10 and the boundary position EP11. Thus, each pupil can view the parallax image with minimum crosstalk at each position between the origin position EP10 and the boundary position EP11.

The controller 9 determines k = 1 when the distance d is longer than or equal to E/8 and shorter than 3E/8, or in other words, when the pupil is between the boundary position EP11 and the boundary position EP12. The boundary position EP12 is the position shifted by a horizontal distance of 3E/n from the origin position EP10. The left viewable section 7aL11 with the pupil located at the boundary position EP11 includes the full area of each of the subpixels P2 to P4 and a partial area of each of the subpixels P5 and P1. The part of each of the subpixels P5 and P1 included in the left viewable section 7aL11 has the same horizontal length. The right viewable section 7aR11 with the pupil located at the boundary position EP11 includes the full area of each of the subpixels P6 to P8 and a partial area of each of the subpixels P1 and P5. The part of each of the subpixels P1 and P5 included in the right viewable section 7aR11 has the same horizontal length. Further displacement of the pupil in the direction away from the origin position EP10 increases the area of each subpixel P5 included in each left viewable section 7aL and displaying the right-eye image. Still further displacement causes each subpixel P5 to have its full area included in each left viewable section 7aL. The displacement increases the area of each subpixel P1 included in each right viewable section 7aR and displaying the left-eye image. Still further displacement causes each subpixel P1 to have its full area included in each right viewable section 7aR. Further displacement of the pupil in the direction away from the origin position EP10 increases the area of each subpixel P6 included in each left viewable section 7aL and displaying the right-eye image. The displacement increases the area of each subpixel P2 included in each right viewable section 7aR and displaying the left-eye image.

For the images of the types displayed by first subpixels P with the pupil located at the origin position EP10, the controller 9 causes second subpixels P to display these images. The second subpixels P are the subpixels each shifted from the corresponding first subpixel P by one subpixel in the direction opposite to the pupil displacement direction. More specifically, the controller 9 causes the subpixels P2 to P8 and P1 to display the images of the types displayed by the subpixels P1 to P8. In this example, the controller 9 causes the subpixels P3 to P5 to display the left-eye image, causes the subpixels P7, P8, and P1 to display the right-eye image, and causes the subpixels P6 and P2 to display the black image. This minimizes a part of the right-eye image viewed with the left eye and minimizes a part of the left-eye image viewed with the pupil of the right eye within the range for which the controller 9 controls the type of image at each position between the boundary position EP11 and the boundary position EP12. This may reduce crosstalk.

The controller 9 determines k = 2 when the distance d is longer than or equal to 3E/8 and shorter than 5E/8, or in other words, when the pupil is between the boundary position EP12 and the boundary position EP13. The boundary position EP13 is the position shifted by a horizontal distance of 5E/8 from the origin position EP10. The left viewable section 7aL12 with the pupil located at the boundary position EP12 includes the full area of each of the subpixels P3 to P5 and a partial area of each of the subpixels P2 and P6. The part of each of the subpixels P2 and P6 included in the left viewable section 7aL12 has the same horizontal length. The right viewable section 7aR12 with the pupil located at the boundary position EP12 includes the full area of each of the subpixels P7, P8, and P1 and a partial area of each of the subpixels P6 and P2. The part of each of the subpixels P6 and P2 included in the left viewable section 7aR12 has the same horizontal length. Further displacement of the pupil in the direction away from the origin position EP10 increases the area of each subpixel P6 included in each left viewable section 7aL and displaying the right-eye image. Still further displacement causes each subpixel P6 to have its full area included in each left viewable section 7aL. The displacement increases the area of each subpixel P2 included in each right viewable section 7aR and displaying the left-eye image. Still further displacement causes each subpixel P2 to have its full area included in each right viewable section 7aR. Further displacement of the pupil in the direction away from the origin position EP10 increases the area of each subpixel P7 included in each left viewable section 7aL and displaying the right-eye image. The displacement increases the area of each subpixel P3 included in each right viewable section 7aR and displaying the left-eye image.

For the images of the types displayed by first subpixels P with the pupil located at the origin position EP10, the controller 9 causes second subpixels P to display these images. The second subpixels P are the subpixels each shifted from the corresponding first subpixel P by two subpixels in the direction opposite to the pupil displacement direction. More specifically, the controller 9 causes the subpixels P3 to P8, P1, and P2 to display the images of the types displayed by the subpixels P1 to P8. In this example, the controller 9 causes the subpixels P4 to P6 to display the left-eye image, causes the subpixels P8, P1, and P2 to display the right-eye image, and causes the subpixels P7 and P3 to display the black image. This minimizes a part of the right-eye image viewed with the left eye and minimizes a part of the left-eye image viewed with the pupil of the right eye within the range for which the controller 9 controls the type of image at each position between the boundary position EP12 and the boundary position EP13. This may reduce crosstalk.

The controller 9 in the second example changes the shutter cells s from the light transmissive state to the light attenuating state in response to an increase in the pupil diameter DP. This may reduce crosstalk. A decrease in the amount of image light may cause an image to be less viewable. However, the user can view an image with less light at a lower illuminance level around the user's eyes. The user can thus properly view the 3D image with less image light reaching the pupils.

The controller 9 changes the type of image to be displayed by each subpixel based on the horizontal distance from the origin position EP10 in accordance with the pupil diameter DP. Thus, the pupil at each position can view the parallax image with minimum crosstalk.

Second Embodiment

A second embodiment of the present disclosure will now be described with reference to the drawings.

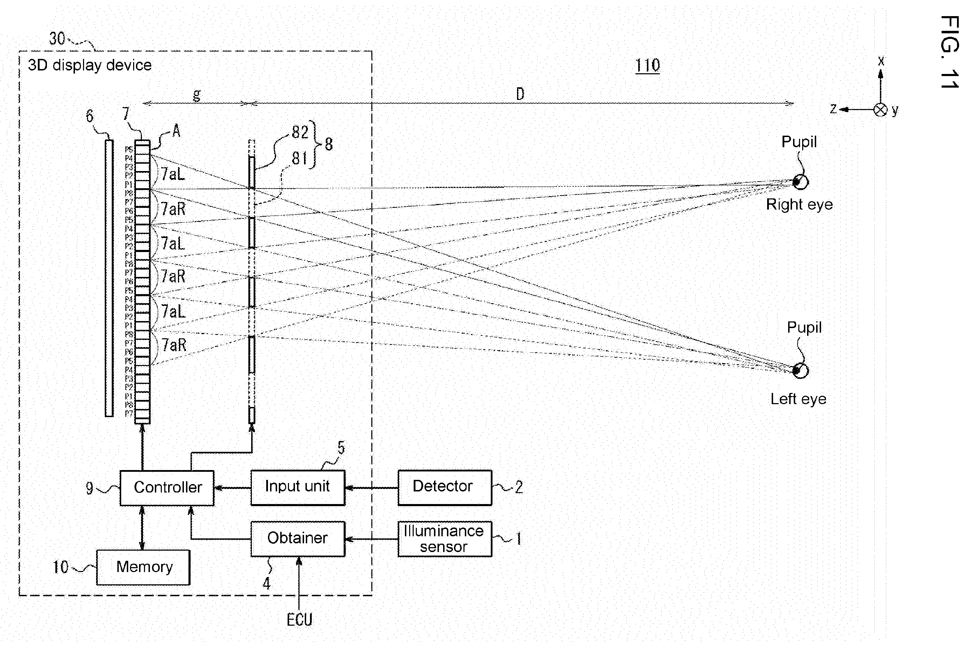

As shown in FIG. 11, a 3D display system 110 according to a second embodiment of the present disclosure includes an illuminance sensor 1, a detector 2, and a 3D display device 30. The illuminance sensor 1 and the detector 2 in the second embodiment are the same as the illuminance sensor 1 and the detector 2 in the first embodiment.

The 3D display device 30 in the second embodiment includes an obtainer 4, an illuminator 6, a display panel 7, a shutter panel 8, a controller 9, and a memory 10. The obtainer 4, the illuminator 6, the display panel 7, and the shutter panel 8 in the second embodiment are the same as the obtainer 4, the illuminator 6, the display panel 7, and the shutter panel 8 in the first embodiment. The controller 9 in the second embodiment includes a processor similarly to the controller 9 in the first embodiment. The memory 10 stores control information including at least one of image control information or shutter control information. First Example

The memory 10 stores image control information. The image control information in a first example associates the illuminance level, the position of the pupil, and the type of image to be displayed by each subpixel P. The image control information is generated by any processor predetermining the type of image (a left-eye image, a right-eye image, or a black image) to be displayed by each subpixel P based on the illuminance level and on the position of the pupil in the manner described in the first example of the first embodiment.

In this structure, in response to the obtainer 4 receiving the illuminance level and an input unit 5 receiving the position of the pupil, the controller 9 extracts, for each subpixel P, the type of image associated with the illuminance level from the image control information stored in the memory 10. The controller 9 displays the image of the type extracted for each subpixel.

The structure in the first example of the second embodiment may reduce crosstalk as in the first example of the first embodiment, thus allowing the user to properly view a 3D image. In the first example of the second embodiment, the controller 9 simply extracts the type of image to be displayed by each subpixel P associated with the illuminance level and with the position of the pupil stored in the memory 10. The controller 9 thus avoids computation to determine, based on the illuminance level and the position of the pupil, the pupil diameter DP, the left viewable sections 7aL1 and the right viewable sections 7aR1, and the type of image to be displayed by each subpixel P. Thus, the controller 9 in the second embodiment may have a less processing load than in the first embodiment.

Second Example

The memory 10 stores the image control information and the shutter control information. The image control information in a third example is generated by any processor predetermining the type of image to be displayed by each subpixel P based on the illuminance level and on the position of the pupil in the manner described in the third example of the first embodiment. The shutter control information in the third example is generated by any processor predetermining the state of each shutter cell s based on the illuminance level and on the position of the pupil in the manner described in the third example of the first embodiment.

In this structure, in response to the obtainer 4 receiving the illuminance level and the input unit 5 receiving the position of the pupil, the controller 9 extracts, for each subpixel P, the type of image associated with the illuminance level from the image control information stored in the memory 10. The controller 9 displays the image of the type extracted for each subpixel P. In response to the obtainer 4 receiving the illuminance level and the input unit 5 receiving the position of the pupil, the controller 9 controls each shutter cell s into the state associated with the illuminance level based on the shutter control information stored in the memory 10.

In the second example of the second embodiment, the controller 9 simply extracts the type of image to be displayed by each subpixel and the control state of each shutter cell s associated with the illuminance level and with the position of the pupil stored in the memory 10. The controller 9 thus avoids computation to determine, based on the illuminance level and the position of the pupil, the pupil diameter DP, the image to be displayed by each subpixel, and the control state of each shutter cell s. Thus, the controller 9 may have a less processing load than in the first embodiment.

Although the above embodiments are described as typical examples, various modifications and substitutions to the embodiments are apparent to those skilled in the art without departing from the spirit and scope of the present disclosure. Thus, the above embodiments should not be construed to be restrictive, but may be variously modified or altered within the scope of the present disclosure. For example, multiple structural blocks described in the above embodiments may be combined into a structural block, or each structural block may be divided.

In the above embodiments, the controller 9 may control the size of the image to appear on the display panel 7 based on the illuminance level. For example, the controller 9 may control the image to be at least partly larger as the illuminance level decreases. For example, the controller 9 may increase the size of an object in the image as the pupil diameter DP increases.

In the above embodiments, the controller 9 may control the luminance level of the image to appear on the display panel 7 based on the illuminance level. For example, the controller 9 may control the luminance level of the image to be higher as the pupil diameter DP increases. For example, the controller 9 may increase the luminance level of an object in the image as the pupil diameter DP increases.

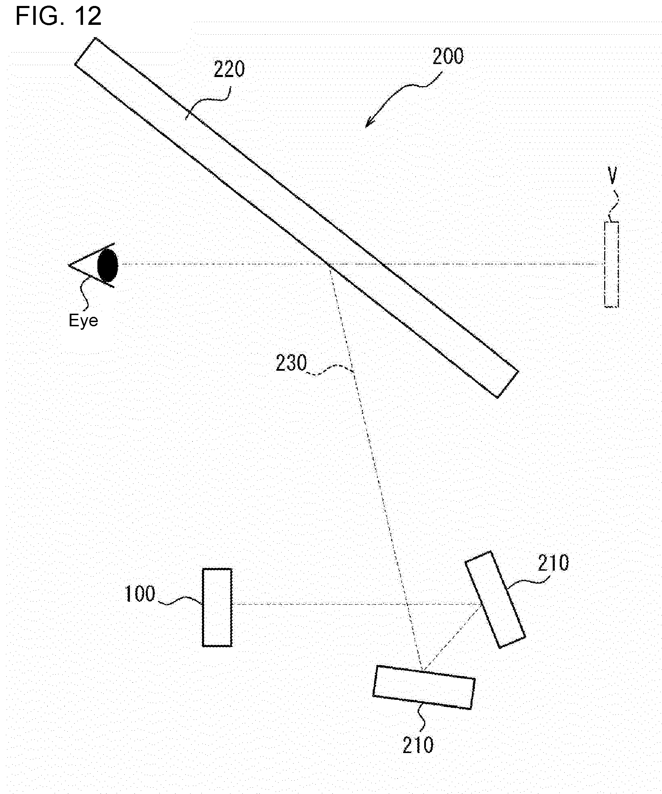

As shown in FIG. 12, the 3D display system 100 in the first embodiment may be incorporated in a head-up display system 200. The head-up display system 200 is also referred to as a HUD system 200. The HUD system 200 includes the 3D display system 100, reflectors 210, and an optical member 220 (reflective optical element). The HUD system 200 directs image light emitted from the 3D display system 100 to reach the optical member 220 with the reflectors 210. The optical member 220 reflects the image light toward the pupils of the user's two eyes. Thus, the HUD system 200 directs image light reflected from the optical member 220 to reach the pupils of the user's left and right eyes. In other words, the HUD system 200 directs image light to travel from the 3D display device 3 to the user's left and right eyes along an optical path 230 indicated by a broken line. The user can view image light reaching the eyes along the optical path 230 as a virtual image V. The 3D display device 3 controls the display in accordance with the positions of the user's left and right eyes to provide a stereoscopic view in accordance with the user's movement. In the 3D display system 100 incorporated in the head-up display system 200, the illuminance sensor 1 detects the ambient illuminance level around the virtual image V viewed with the user's eyes. Similarly, the 3D display system 110 in the second embodiment may be incorporated in the HUD system 200.

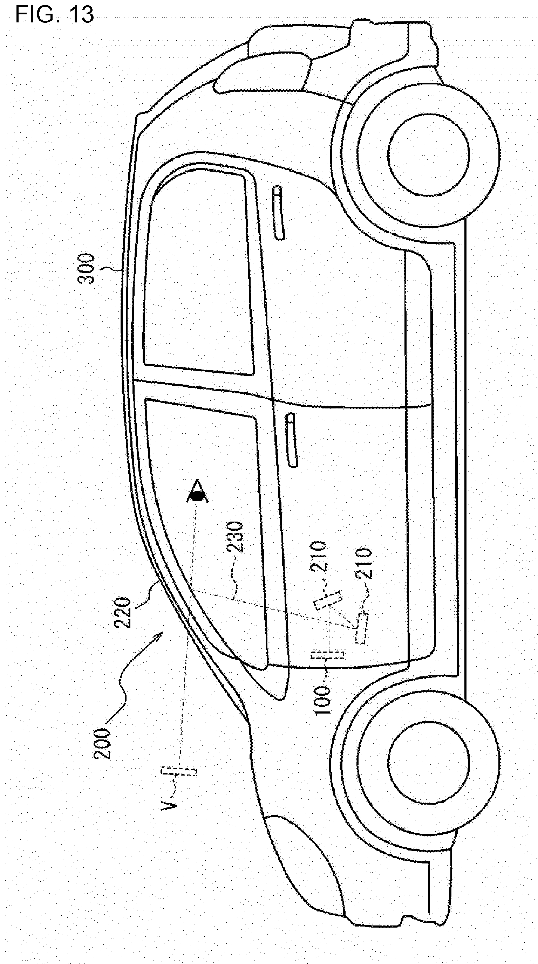

As shown in FIG. 13, the HUD system 200 incorporating the 3D display system 100 in the first embodiment may be mounted on a movable object 300. The HUD system 200 may include components that also serve as devices or components included in the movable object 300. For example, the movable object 300 may include a windshield that serves as the optical member 220. The devices or components of the HUD system 200 serving as devices or components included in the movable object 300 may be referred to as HUD modules or 3D display components. Similarly, the HUD system 200 incorporating the 3D display system 110 in the second embodiment may be mounted on the movable object 300.

The 3D display device according to one embodiment of the present disclosure allows the user to properly view a 3D image independently of changes in the ambient illuminance level around the image viewed by the user.

The present disclosure may be embodied in various forms without departing from the spirit or the main features of the present disclosure. The embodiments described above are thus merely illustrative in all respects. The scope of the present disclosure is defined not by the description given above but by the claims. Any modifications and alterations contained in the claims fall within the scope of the present disclosure.

The elements in the present disclosure implement operations that are implementable. The operations implemented by the elements in the present disclosure can thus refer to the elements operable to implement the operations. The elements implementing operations in the present disclosure can be expressed as the elements operable to implement the operations. The operations implementable by the elements in the present disclosure can be expressed as elements including or having the elements operable to implement the operations. A first element causing a second element to implement an operation in the present disclosure can refer to the first element operable to cause the second element to perform the operation. A first element causing a second element to perform an operation in the present disclosure can be expressed as the first element operable to control the second element to perform the operation. Operations implemented by the elements in the present disclosure that are not described in the claims are understood as being optional operations.

Reference Signs List

1 illuminance sensor
2 detector
3, 30 3D display device
4 obtainer
5 input unit
6 illuminator
7 display panel
7aL left viewable section
7aRright viewable section

7bL left attenuation section
7bR right attenuation section
7aLR two-eye viewable section
8 shutter panel
9 controller
10 memory
81 transmissive area
82 attenuating area
100, 110 3D display system
200 head-up display system
210 reflector
220 optical member
230 optical path
300 movable object
A active area
EP0 reference origin position
EP10 origin position
EP11 to EP13 boundary position
V virtual image
Pg subpixel group
P, P1 to P8 subpixel
sg shutter cell group
s, s1 to s9 shutter cell

**Claims**

1. A three-dimensional display device, comprising:

   a display panel including a plurality of subpixels configured to display a parallax image including a first image and a second image having parallax between the images;
   a shutter panel configured to define a ray direction of image light from the parallax image;
   an obtainer configured to obtain an ambient illuminance level around a user;
   an input unit configured to receive a position of a pupil of the user; and
   a controller configured to cause a set of subpixels included in the plurality of subpixels to display a black image based on the ambient illuminance level,
   determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and
   control the display panel based on a displacement of the pupil from the origin position in the interocular direction.

2. The three-dimensional display device according to claim 1, wherein
   the controller determines a pupil diameter of the pupil based on the ambient illuminance level, and determines the origin position based on the pupil diameter.

3. The three-dimensional display device according to claim 1 or claim 2, wherein
   the controller changes a portion of the shutter panel in a light transmissive state to a light attenuating state based on the ambient illuminance level.

4. The three-dimensional display device according to claim 3, wherein
   the controller determines a pupil diameter of the pupil based on the ambient illuminance level, and changes the portion of the shutter panel in the light transmissive state to the light attenuating state based on the pupil diameter.

5. The three-dimensional display device according to claim 3 or claim 4, wherein
   the controller determines a transmissive area length to be a first area length for the ambient illuminance level higher than or equal to a reference value, and determines the transmissive area length to be a second area length shorter than the first area length for the ambient illuminance level lower than the reference value, and the transmissive area length is a horizontal length of a portion of the shutter panel controlled in the light transmissive state.

6. A three-dimensional display device, comprising:

a display panel including a plurality of subpixels configured to display a parallax image including a first image and a second image having parallax between the images;
a shutter panel including a plurality of shutter cells each having a state controllable into a light transmissive state or a light attenuating state to define a ray direction of image light from the parallax image;
an obtainer configured to obtain an ambient illuminance level around a user;
an input unit configured to receive a position of a pupil of the user; and
a controller configured to control the state of the shutter panel based on the ambient illuminance level, determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and control the display panel based on the state and on a displacement of the pupil from the origin position.

7. The three-dimensional display device according to claim 6, wherein
the controller changes a portion of the shutter panel in the light transmissive state to the light attenuating state based on the ambient illuminance level.

8. The three-dimensional display device according to claim 6 or claim 7, wherein
the controller determines a horizontal length of a portion of the shutter panel controlled in the light transmissive state to be a first area length for the ambient illuminance level higher than or equal to a reference value, and determines the horizontal length to be a second area length shorter than the first area length for the ambient illuminance level lower than the reference value.

9. A three-dimensional display system, comprising:

a detector configured to detect a position of a pupil of a user; and
a three-dimensional display device including

a display panel including a plurality of subpixels configured to display a parallax image including a first image and a second image having parallax between the images,
a shutter panel configured to define a ray direction of image light from the parallax image,
an obtainer configured to obtain an ambient illuminance level around the user,
an input unit configured to receive the position of the pupil detected by the detector, and
a controller configured to cause a set of subpixels included in the plurality of subpixels to display a black image based on the ambient illuminance level, determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and control at least the display panel based on a displacement of the pupil from the origin position in the interocular direction.

10. A three-dimensional display system, comprising:

a detector configured to detect a position of a pupil of a user; and
a three-dimensional display device including

a display panel including a plurality of subpixels configured to display a parallax image including a first image and a second image having parallax between the images,
a shutter panel including a plurality of shutter cells each having a state controllable into a light transmissive state or a light attenuating state to define a ray direction of image light from the parallax image,
an obtainer configured to obtain an ambient illuminance level around the user,
an input unit configured to receive the position of the pupil of the user, and
a controller configured to control the state of the shutter panel based on the ambient illuminance level,
determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and
control the display panel based on the state and on a displacement of the pupil from the origin position.

11. A movable object, comprising:

a detector configured to detect a position of a pupil of a user; and
a three-dimensional display device including

a display panel including a plurality of subpixels configured to display a parallax image including a first image and a second image having parallax between the images,
a shutter panel configured to define a ray direction of image light from the parallax image,
an obtainer configured to obtain an ambient illuminance level around the user,
an input unit configured to receive the position of the pupil of the user, and
a controller configured to cause a set of subpixels included in the plurality of subpixels to display a black image based on the ambient illuminance level,
determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and
control at least the display panel based on a displacement of the pupil from the origin position in the interocular direction.

12. A movable object, comprising:

a detector configured to detect a position of a pupil of a user; and
a three-dimensional display device including

a display panel including a plurality of subpixels configured to display a parallax image including a first image and a second image having parallax between the images,
a shutter panel including a plurality of shutter cells each having a state controllable into a light transmissive state or a light attenuating state to define a ray direction of image light from the parallax image,
an obtainer configured to obtain an ambient illuminance level around the user,
an input unit configured to receive the position of the pupil of the user, and
a controller configured to control the state of the shutter panel based on the ambient illuminance level,
determine an origin position, the origin position being a position of the pupil for a viewable section on the display panel to have a center aligning with a center of a set of consecutive subpixels in an interocular direction along a line segment passing through pupils of two eyes of the user, the viewable section being viewable with the pupil of one of the two eyes of the user, the set of consecutive subpixels being included in the plurality of subpixels and displaying the first image or the second image corresponding to the viewable section, and
control the display panel based on the state and on a displacement of the pupil from the origin position.

13. The movable object according to claim 11 or claim 12, further comprising:
a reflective optical element configured to reflect the image light toward the pupils of the two eyes of the user.

14. A three-dimensional display device, comprising:

a display panel including a plurality of subpixels configured to display a parallax image including a first image and a second image having parallax between the images;
a shutter panel configured to define a ray direction of image light from the parallax image;
an obtainer configured to obtain an ambient illuminance level around a user;
an input unit configured to receive a position of a pupil of the user; and
a controller configured to cause a set of subpixels included in the plurality of subpixels to display a black image based on the ambient illuminance level, and
control display of the parallax image based on the ambient illuminance level and on the position of the pupil.

15. A three-dimensional display device, comprising:

a display panel including a plurality of subpixels configured to display a parallax image including a first image and a second image having parallax between the images;
a shutter panel configured to define a ray direction of image light from the parallax image;
an obtainer configured to obtain an ambient illuminance level around a user;
an input unit configured to receive a position of a pupil of the user; and
a controller configured to cause a set of subpixels included in the plurality of subpixels to display a black image based on the ambient illuminance level, and
control display of the parallax image based on whether the black image is displayed and on the position of the pupil.

16. A three-dimensional display device, comprising:

a display panel including a plurality of subpixels configured to display a parallax image including a first image and a second image having parallax between the images;
a shutter panel configured to define a ray direction of image light from the parallax image;
an obtainer configured to obtain an ambient illuminance level around a user;
an input unit configured to receive a position of a pupil of the user; and
a controller configured to cause a set of subpixels included in the plurality of subpixels to display a black image based on the ambient illuminance level, and
change, based on the ambient illuminance level, the position of the pupil that causes a change in display of the parallax image.

17. A three-dimensional display device, comprising:

a display panel including a plurality of subpixels configured to display a parallax image including a first image and a second image having parallax between the images;
a shutter panel configured to define a ray direction of image light from the parallax image;
an obtainer configured to obtain an ambient illuminance level around a user;
an input unit configured to receive a position of a pupil of the user; and
a controller configured to cause a set of subpixels included in the plurality of subpixels to display a black image based on the ambient illuminance level, and
change, based on whether the black image is displayed, the position of the pupil that causes a change in display of the parallax image.

FIG. 1

# FIG. 2

FIG. 3

EP 3 989 541 A1

| s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 | s8 | s9 | s1 | s2 | s3 |
| s9 | s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 | s8 | s9 | s1 | s2 |
| s8 | s9 | s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 | s8 | s9 | s1 |
| s7 | s8 | s9 | s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 | s8 | s9 |
| s6 | s7 | s8 | s9 | s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 | s8 |
| s5 | s6 | s7 | s8 | s9 | s1 | s2 | s3 | s4 | s5 | s6 | s7 | s8 | s9 | s1 | s2 | s3 | s4 | s5 | s6 | s7 | s8 | s9 | s1 | s2 | s3 | s4 | s5 | s6 | s7 |

s, sg

Bp

8

z ⊗  x
y

FIG. 4

EP 3 989 541 A1

**FIG. 5**

7

z ⊗ → x
↓ y

| P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R |
| P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R |
| P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L |
| P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L |
| P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L |
| P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L | P2 L | P3 L | P4 L | P5 R | P6 R | P7 R | P8 R | P1 L |

7bR | 7aR | 7bR | 7aR | 7bR | 7aR | 7bR | 7aR | 7bR

# FIG. 6

# FIG. 7

FIG. 8

FIG. 9

FIG. 10

FIG. 11

FIG. 12

FIG. 13

## INTERNATIONAL SEARCH REPORT

International application No.

PCT/JP2020/024446

### A. CLASSIFICATION OF SUBJECT MATTER

H04N 13/366(2018.01)i; G02B 30/00(2020.01)i; G03B 35/24(2006.01)i; G09F
9/00(2006.01)i; G09G 5/00(2006.01)i; G09G 5/10(2006.01)i; G09G
5/36(2006.01)i; H04N 13/31(2018.01)i
FI: H04N13/366; G02B30/00; G03B35/24; G09F9/00 313; G09F9/00 361;
G09F9/00 366G; G09G5/00 530H; G09G5/00 550C; G09G5/10 B;
G09G5/36 510V; H04N13/31

According to International Patent Classification (IPC) or to both national classification and IPC

### B. FIELDS SEARCHED

Minimum documentation searched (classification system followed by classification symbols)
H04N13/00; G02B30/00; G03B35/00; G09F9/00; G09G5/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2019/009243 A1 (KYOCERA CORP.) 10.01.2019 (2019-01-10) paragraphs [0011]-[0083], fig. 1-12 | 14–17<br>1–13 |
| A | WO 2013/094192 A1 (PANASONIC INTELLECTUAL PROPERTY CORPORATION OF AMERICA) 27.06.2013 (2013-06-27) paragraphs [0213]-[0321], fig. 25-42 | 1–17 |
| A | WO 2013/038545 A1 (TOSHIBA CORP.) 21.03.2013 (2013-03-21) paragraphs [0071]-[0089], fig. 5-7 | 1–17 |
| A | JP 2007-78923 A (FUJITSU TEN LTD.) 29.03.2007 (2007-03-29) paragraph [0052], fig. 18 | 1–17 |
| A | JP 2014-110568 A (SONY CORP.) 12.06.2014 (2014-06-12) entire text, all drawings | 1–17 |
| A | JP 2013-8001 A (SONY CORP.) 10.01.2013 (2013-01-10) entire text, all drawings | 1–17 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 August 2020 (25.08.2020) | 08 September 2020 (08.09.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

International application no.

PCT/JP2020/024446

| Patent Documents referred in the Report | Publication Date | Patent Family | Publication Date |
|---|---|---|---|
| WO 2019/009243 A1 | 10 Jan. 2019 | JP 2019-15824 A CN 110799894 A | |
| WO 2013/094192 A1 | 27 Jun. 2013 | US 2014/0340746 A1 paragraphs [0253]- [0352], fig. 25-42 CN 104041025 A | |
| WO 2013/038545 A1 | 21 Mar. 2013 | US 2014/0192169 A1 paragraphs [0077]- [0096], fig. 5-7 | |
| JP 2007-78923 A | 29 Mar. 2007 | (Family: none) | |
| JP 2014-110568 A | 12 Jun. 2014 | US 2014/0152663 A1 entire text, all drawings CN 103856769 A | |
| JP 2013-8001 A | 10 Jan. 2013 | US 2014/0028670 A1 entire text, all drawings WO 2012/161076 A1 EP 2717583 A1 CN 103548346 A KR 10-2014-0022861 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001166259 A